# EUROPÄISCHE PATENTSCHRIFT

(11) **EP 0 889 249 B1**
(45) Veröffentlichungstag und Bekanntmachung des Hinweises auf die Patenterteilung: **04.10.2001**
(21) Anmeldenummer: 98810407.1
(22) Anmeldetag: 06.05.1998
(51) Int. Cl.: F16B 13/06

(54) **Spreizdübel**
Dowel
Cheville

(30) Priorität: 18.06.1997 DE 19725719
(43) Veröffentlichungstag der Anmeldung: 07.01.1999
(73) Patentinhaber: HILTI Aktiengesellschaft, 9494 Schaan (LI)
(72) Erfinder: Hausner, Wolfgang, 86859 Igling (DE); Belz, Thomas, 86916 Kaufering (DE); Popp, Franz, 86807 Buchloe (DE); Bisping, Heinz, 86163 Augsburg (DE)
(74) Vertreter: Wildi, Roland

(56) Entgegenhaltungen:
- EP-A- 0 388 694
- EP-A- 0 560 518
- US-A- 3 365 999
- US-A- 3 937 122

## Beschreibung

Die Erfindung betrifft einen Spreizdübel gemäss dem Oberbegriff des Patentanspruchs 1.

Für leichte und mittlere Lasten kommen meist Spreizdübel zum Einsatz, die eine im wesentlichen zylindrische Hülse umfassen, die meist aus Kunststoff besteht. Die Hülse wird in eine vorbereitete Aufnahmebohrung im Untergrund eingesetzt und ist durch das Eindrehen einer Befestigungsschraube radial aufweitbar, wodurch sie gegen die Wandung der Aufnahmebohrung gepresst und verspreizt wird. Flügel oder Vorsprünge an der Aussenkontur der Hülse dienen als Verdrehsicherung in der Aufnahmebohrung, wenn die Befestigungsschraube eingedreht wird. Die Hülsen der bekannten Spreizdübel weisen vielfach spezielle Ausgestaltungen der Innenkontur der Hülsenbohrung auf, die dazu dienen soll, das Eindrehmoment insbesondere im Fussabschnitt der Hülse herabzusetzen. Dies ist vor allem bei Knotendübeln von grosser Bedeutung, bei denen die Befestigungsschraube in den Fussabschnitt eingedreht wird und dieser beim Eindrehen der Befestigungsschraube zurückgezogen wird, wobei der Spreizdübel an einer oder mehreren Sollknickstellen gefaltet wird und sich verkürzt. Die Herstellung derartiger nicht-zylindrischer Innenkonturen der Hülsenbohrung bzw. der Bohrung im Fussabschnitt ist fertigungstechnisch sehr aufwendig. Beispielsweise sind für die Herstellung von Rippen, Nuten oder für eine von der Kreisform abweichende Querschnittsform der Hülsenbohrung von Kunststoffdübeln spezielle Kernnadeln erforderlich, die beispielsweise beim Spritzgiessen des Kunststoffdübels in der Kunststoffspritzgussform angeordnet werden müssen, was die Produktion derartiger Kunststoffdübel verteuert.

Ein anderer Ansatz, das Eindrehmoment beim Einschrauben einer Befestigungsschraube insbesondere in den Fussabschnitt der Hülse herabzusetzen, besteht darin, in der Wandung des Fussabschnitts von innen nach aussen durchgehende Schlitze oder dergleichen Öffnungen vorzusehen. Ein Beispiel für einen derartigen Spreizdübel ist aus der EP-B-0 560 518 bekannt. Der dort beschriebene Knotendübel weist in der Bohrung des Fussabschnitts ein Innengewinde auf. Zusätzlich ist die Wandung des Fussabschnitts mit einer sich in Längsrichtung erstreckenden, im wesentlichen rechteckigen Öffnung ausgestattet. Die Herstellung des Innengewindes in der Bohrung des Fussabschnitts ist ähnlich aufwendig wie die Herstellung von Rippen oder Nuten. Zusätzlich erhöht die durchgehende Öffnung in der Wandung des Fussabschnitts die Gefahr, dass die Hülse bei Verwendung grosser Schraubendurchmesser im Bereich der Öffnung ein- bzw. aufreisst.

Aufgabe der vorliegenden Erfindung ist es daher, einen Spreizdübel dahingehend zu modifizieren, dass beim Eindrehen einer Befestigungsschraube in die Hülse das Eindrehmoment verringert ist. Dabei sollen komplizierte Formgebungen der Bohrung der Hülse vermieden werden können. Der Spreizdübel soll einfach und kostengünstig in der Herstellung sein. Die Gefahr eines Ein- bzw. Aufreissens des Spreizdübels soll vermieden werden können.

Die Lösung dieser Aufgaben besteht in einem Spreizdübel mit den im kennzeichnenden Abschnitt des Patentanspruchs 1 angeführten Merkmalen. Der erfindungsgemässe Spreizdübel besitzt einen sich in axialer Richtung erstreckenden Dübelkörper, der an seiner Aussenkontur mit Drehsicherungselementen ausgestattet ist. Der Dübelkörper weist eine axiale Bohrung auf und besitzt an seinem in Setzrichtung vorderen Bereich einen Fussabschnitt, in den eine Befestigungsschraube eindrehbar ist. Die Bohrung im Fussabschnitt weist eine glatte, zylindrische Innenwandung auf. In der Aussenwandung des Fussabschnitts ist wenigstens eine taschenartige Vertiefung angeordnet, die sich über einen Teil der axialen Länge und über einen Teil des Umfangs des Fussabschnitts erstreckt und eine verringerte Wandstärke aufweist.

Durch die wenigstens eine taschenartige Vertiefung in der Aussenwandung ist der Fussabschnitt des Dübelkörpers mit einem Bereich reduzierter Wandstärke versehen. Der querschnittgeschwächte Bereich setzt der eingedrehten Befestigungsschraube einen geringeren Widerstand entgegen als die ungeschwächten Bereiche. Die Befestigungsschraube kann sich dadurch leichter in den Fussabschnitt einfurchen. Dadurch sind die beim Eindrehen der Befestigungsschraube auftretenden Eindrehmomente herabgesetzt. Der Fussabschnitt weist eine zylindrische Innenwandung auf, die frei ist von Rippen oder Vertiefungen. Daher sind keine aufwendigen Kernnadeln oder dergleichen erforderlich, die den Formgebungsprozess, beispielsweise im Spritzgussverfahren, verkomplizieren und verteuern. Die Anzahl und Form der Vertiefungen in der Aussenwandung kann bereits bei der Herstellung der Formwerkzeuge, beispielsweise Spritzgusswerkzeuge, berücksichtigt werden. Dadurch ist der erfindungsgemässe Spreizdübel sehr kostengünstig herstellbar. Die Aussenwandung des Kopfabschnitts bleibt trotz der Querschnittsschwächung im Bereich der taschenartigen Vertiefungen geschlossen. Dadurch wird ein Ein- oder Aufreissen des Fussabschnitts beim Eindrehen der Befestigungsschraube verhindert, und der tragende Flächenanteil zwischen dem Material des Dübelkörpers und den Gewindeflanken der Befestigungsschraube wird erhöht.

Querschnittsschwächungen, bei denen die Wandstärke im Bereich der taschenartigen Vertiefung etwa 1/6 bis 2/3 der Materialsstärke der berandenden Bereiche beträgt erweisen sich sowohl bezüglich der Verringerung des Eindrehmoments als auch hinsichtlich der Sicherheit gegen ein Ein- bzw. Aufreissen des Fussabschnitts von Vorteil.

Indem die taschenartige Vertiefung eine axiale Erstreckung aufweist, die 1/10 bis 9/10 der axialen Länge des Fussabschnitts beträgt, ist gewährleistet, dass ihre axiale Länge wenigstens der Länge eines vollständigen Gewindegangs der üblicherweise in den Spreizdübel eingedrehten Holz- und Spanplattenschrauben entspricht. Dadurch kann sich die Befestigungsschraube leicht und sicher in die Wandung der zylindrischen Bohrung im Fussabschnitt einfurchen. Dieser unter herabgesetztem Eindrehmoment eingefurchte Gewindeabschnitt stellt dann den beim weiteren Eindrehen der Befestigungsschraube nachfolgenden Gewindegängen nur mehr einen reduzierten Widerstand entgegen. Somit ist durch die gewählte Längserstreckung der taschenartigen Vertiefung das Eindrehmoment zu Beginn und im weiteren Verlauf des Eindrehvorgangs der Befestigungsschraube verringert.

Auch die Ausdehnung der taschenartigen Vertiefung in Umfangsrichtung hat einen Einfluss auf das resultierende Eindrehmoment. Dabei erweist sich eine Erstreckung der taschenartigen Vertiefung in Umfangsrichtung, die etwa 1/6 bis 3/4 des Umfangs des Dübelkörpers am Fussabschnitt beträgt, als zweckmässig.

In der Aussenwandung des Fussabschnitts des Dübelkörpers können zwei oder mehrere taschenartige Vertiefungen vorgesehen sein. Dabei können sie in axialer Richtung hintereinander angeordnet sein, um die Gesamtlänge des Bereichs mit reduzierter Wandstärke zu vergrössern. Für die Symmetrie der Belastung des Dübelkörpers beim Eindrehen der Befestigungsschraube ist es auch von Vorteil, wenn die taschenartigen Vertiefungen in gleichen Winkelabständen entlang des Umfangs des Fussabschnitts angeordnet sind.

Die taschenartigen Vertiefungen können verschiedene Formen aufweisen. Indem sie als geometrische Figuren, Pfeile oder alphanumerische Zeichen ausgebildet sind, können sie sogar für weitere Informationen eingesetzt werden. Beispielsweise kann die taschenartige Vertiefung eine Pfeilform aufweisen, wobei die Spitze des Pfeiles in Setzrichtung weist. Auf diese Weise ausgebildet, bildet die taschenartige Vertiefung eine Hilfe für den Anwender, damit der Spreizdübel korrekt in die Bohrung eingesetzt wird. Zahlen, Buchstaben oder Kombinationen daraus können beispielsweise als Hinweis für die Durchmesser der für den jeweiligen Spreizdübel geeigneten Befestigungsschrauben eingesetzt werden.

Die erfindungsgemässe Ausbildung des Fussabschnitts des Spreizdübels ist insbesondere bei Knotendübeln von Vorteil, bei denen der Dübelkörper entlang seiner axialen Erstreckung eine oder mehrere Sollbiegestellen aufweist und der Fussabschnitt beim Eindrehen der Befestigungsschraube angezogen wird, so dass der Dübelkörper an den Sollbiegestellen ausknickt und sich verkürzt.

Der erfindungsgemäss ausgebildete Spreizdübel kann ein Blechdübel sein. Besonders vorteilhaft und kostengünstig ist er herstellbar, wenn der Dübelkörper aus Kunststoff besteht.

Im folgenden wird die Erfindung anhand von in den schematischen Zeichnungen dargestellten Ausführungsbeispielen näher erläutert. Es zeigen:
- Fig. 1: ein erstes Ausführungsbeispiel eines erfindunggemässen Spreizdübels;
- Fig. 2: einen Querschnitt des Fussabschnitts gemäss Schnittlinie II-II in Fig. 1; und
- Fig.3-Fig.5: verschiedene Formen von taschenartigen Vertiefungen.

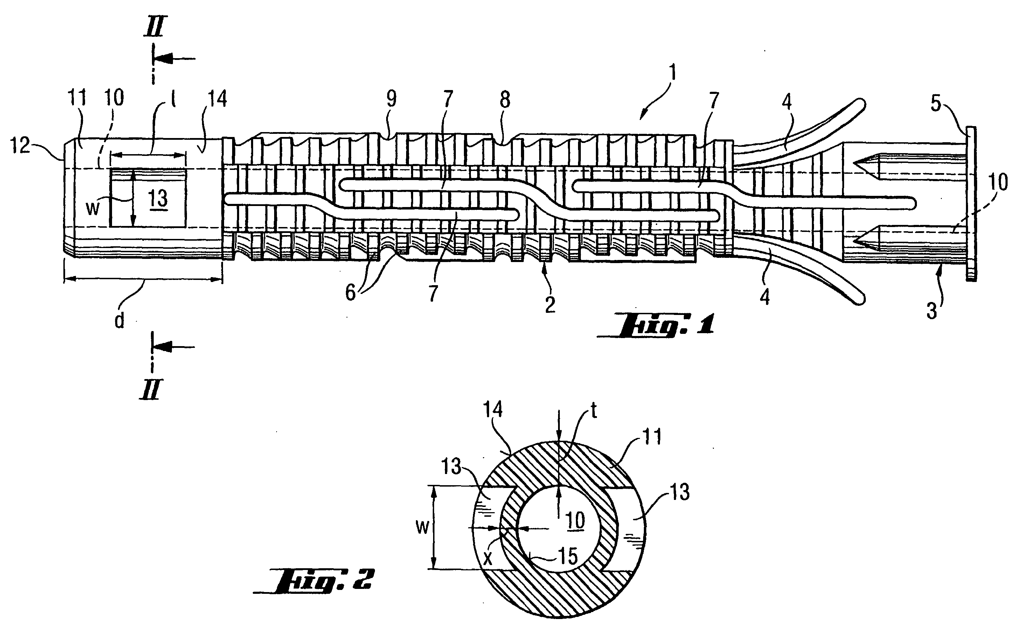

Ein erstes Ausführungsbeispiel des erfindungsgemässen Spreizdübels ist in Fig. 1 gesamthaft mit dem Bezugszeichen 1 versehen. Der Spreizdübel 1 ist insbesondere ein Knotendübel aus einem spritzgussfähigen Kunststoff. Er umfasst einen Dübelkörper 2 mit einem Fussabschnitt 11 und einem Kopfteil 3. Das Kopfteil 3 ist mit radial abstehenden, elastischen Flügeln oder Lappen 4 versehen, die als Verdrehsicherung dienen. Am rückwärtigen Ende kann das Kopfteil 3 einen umlaufenden Ringbund 5 aufweisen, der zur Abstützung am Bohrlochrand dient. Der Dübelkörper 2 ist zwischen dem Kopfteil 3 und dem Fussabschnitt 11 mit zahnartigen Profilierungen 6 versehen, die im aufgespreizten Zustand unter Lastangriff einem Herausziehen des Spreizdübels aus dem Bohrloch entgegenwirken. Im wesentlichen axial verlaufende Schlitze 7 unterteilen den Dübelkörper 2 in Segmente und erlauben ein radiales Aufweiten beim Einschrauben einer Befestigungsschraube. Weiterhin ist der Dübelkörper mit Sollbiegestellen 8,9 versehen. Die Schlitze 7 münden in einer axialen Bohrung 10, die den Dübelkörper 2 durchsetzt und sich vom rückwärtigen Ende des Kopfteils 3 zum Fussabschnitt 11 erstreckt. Die Bohrung 10 mündet am Vorderende 12 des Fussabschnitts 11, das sich im gesetzten Zustand im Bohrlochtiefsten befindet.

In der Aussenwandung 14 des Fussteils 11 sind taschenartige Vertiefungen 13 angeordnet, deren Länge I etwa 1/10 bis 9/10 der axialen Erstreckung d des Fussabschnitts 11 beträgt. Die taschenartigen Vertiefungen 13 besitzen eine Erstreckung in Umfangsrichtung w, die etwa 1/6 bis 3/4 des Umfangs des Fussabschnitts 11 beträgt.

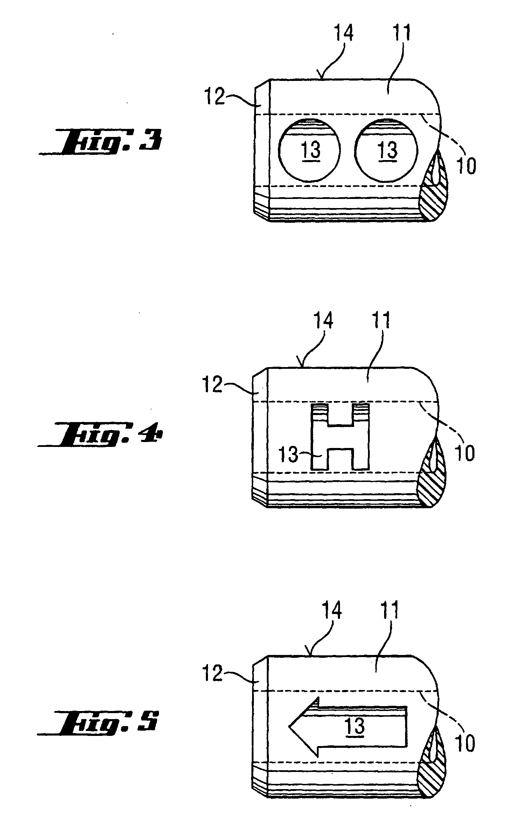

Aus der Querschnittsdarstellung des Fussabschnitts 11 in Fig. 2 ist ersichtlich, dass die Wandstärke x im Bereich der taschenartigen Vertiefungen 13 etwa 1/6 bis 2/3 der Materialstärke t der übrigen Bereiche des Fussabschnitts 11 beträgt. Gemäss der Darstellung sind zwei taschenartige Vertiefungen 13 vorgesehen, die einander im gleichen Winkelabstand gegenüberliegen. Die Bohrung 10 des Dübelkörpers ist im Bereich des Fussabschnitts 11 zylindrisch ausgebildet, und die Innenwandung 15 der Bohrung 10 ist frei von Vorsprüngen, Rippen, Nuten oder dergleichen Unregelmässigkeiten.

Fig. 3 bis Fig. 5 zeigen weitere Varianten von Fussteilen 11 mit verschieden geformten taschenartigen Vertiefungen 13. Gemäss Fig. 3 sind zwei kreisförmige taschenartige Vertiefungen 13 axial hintereinander angeordnet. Es versteht sich, dass auf der vom Betrachter abgewandten Seite des Spreizdübel analog geformte, weitere taschenartige Vertiefungen vorgesehen sein können. Die taschenartige Vertiefung 13 des Ausführungsbeispiels gemäss Fig. 4 besitzt die Form eines alphanumerischen Zeichens, insbesondere eines Buchstabens. Die taschenartige Vertiefung könnte auch die Form einer Zahl aufweisen. Auch sind Kombinationen unterschiedlich geformter taschenartiger Vertiefungen möglich. Fig. 5 schliesslich zeigt eine taschenartige Vertiefung 13 mit der Form eines Pfeiles, dessen Spitze zum Vorderende 12 des Fussabschnitts 11 weist. Grundsätzlich bestehen bezüglich der taschenartigen Vertiefungen 13 keine ausgeprägten Formerfordernisse. Wesentlich für die Funktion des erfindungsgemässen Spreizdübels sind die Abmessungen in Längs- und in Umfangsrichtung, die Wandstärken im querschnittsgeschwächten Bereich des Fussabschnitts sowie der Umstand, dass die Bohrung im Fussabschnitt zylindrisch glatt ausgebildet ist.

## Patentansprüche

1. Spreizdübel mit einem sich in axialer Richtung erstreckenden Dübelkörper (2), der an seiner Aussenkontur mit Drehsicherungselementen (4) ausgestattet ist, wobei der Dübelkörper (2) eine axiale Bohrung (10) aufweist und an seinem in Setzrichtung vorderen Bereich einen Fussabschnitt (11) aufweist, in den eine Befestigungsschraube eindrehbar ist, **dadurch gekennzeichnet, dass** die Bohrung (10) im Fussabschnitt eine glatte, zylindrische Innenwandung (15) aufweist und in der Aussenwandung (14) des Fussabschnitts (11) wenigstens eine taschenartige Vertiefung (13) angeordnet ist, die sich über einen Teil der axialen Länge (d) und über einen Teil des Umfangs des Fussabschnitts (11) erstreckt und eine verringerte Wandstärke (x) aufweist.

2. Spreizdübel nach Anspruch 1, **dadurch gekennzeichnet, dass** die Wandstärke (x) im Bereich der taschenartigen Vertiefung (13) etwa 1/6 bis 2/3 der Materialstärke (t) der berandenden Bereiche beträgt.

3. Spreizdübel nach Anspruch 1 oder 2, **dadurch gekennzeichnet, dass** die taschenartige Vertiefung (13) eine axiale Erstreckung (I) aufweist, die etwa 1/10 bis 9/10 der axialen Länge (d) des Fussabschnitts (11) beträgt.

4. Spreizdübel nach einem der vorangehenden Ansprüche, **dadurch gekennzeichnet, dass** die Erstreckung (w) der taschenartigen Vertiefung (13) in Umfangsrichtung etwa 1/6 bis 3/4 des Umfangs des Dübelkörpers (2) am Fussabschnitt (11)beträgt.

5. Spreizdübel nach einem der vorangehenden Ansprüche, **dadurch gekennzeichnet, dass** in der Aussenwandung (14) des Fussabschnitts (11) des Dübelkörpers (2) zwei oder mehrere Vertiefungen (13) vorgesehen sind, die in axialer Richtung hintereinander und/oder in gleichen Winkelabständen entlang des Umfangs des Fussabschnitts (11) angeordnet sind.

6. Spreizdübel nach einem der vorangehenden Ansprüche, **dadurch gekennzeichnet, dass** die taschenartigen Vertiefungen (13) als geometrische Figuren, Pfeile oder alphanumerische Zeichen ausgebildet sind.

7. Spreizdübel nach einem der vorangehenden Ansprüche, **dadurch gekennzeichnet, dass** der Dübelkörper (2) entlang seiner axialen Erstreckung eine oder mehrere Sollbiegestellen (8, 9) aufweist.

8. Spreizdübel nach einem der vorangehenden Ansprüche, **dadurch gekennzeichnet, dass** der Dübelkörper (2) aus Kunststoff besteht.

## Claims

1. Expanding dowel with an axially extending dowel body (2) provided on its outer contour with anti-rotation elements (4), the dowel body (2) having an axial bore (10) and a foot section at its leading end in the direction of insertion, in which foot section a fixing screw is insertable, **characterised in that** the bore (10) in the foot section has a smooth, cylindrical inner wall (15) and at least one recessed cavity (13) is arranged in the outer wall (14) of the foot section (11), which cavity extends over a part of the axial length (d) and over a part of the circumference of the foot section (11 ) and has a reduced wall thickness (x).

2. Expanding dowel according to Claim 1, **characterised in that** the wall thickness (x) in the area of the recessed cavity (13) is about 1/6 to 2/3 as great as the material thickness (t) of the adjacent areas.

3. Expanding dowel according to Claim 1 or 2, **characterised in that** the recessed cavity (13) has an axial extension (I) about 1/10 to 9/10 as great as the axial length (d) of the foot section (11).

4. Expanding dowel according to one of the preceding claims, **characterised in that** the extension (w) of the recessed cavity (13) in the circumferential direction is about 1/6 to 3/4 as great as the circumference of the dowel body (2) in the foot section (11).

5. Expanding dowel according to one of the preceding claims, **characterised in that** two or more recesses (13) are provided in the outer wall (14) of the foot section (11) of the dowel body (2), which recesses (13) are arranged successively in the axial direction and/or at equal angular distances along the circumference of the foot section (11).

6. Expanding dowel according to one of the preceding claims, **characterised in that** the recessed cavities (13) are formed as geometrical figures, arrows or alphanumeric symbols.

7. Expanding dowel according to one of the preceding claims, **characterised in that** the dowel body (2) has one or more predetermined bending points (8, 9) along its axial extension.

8. Expanding dowel according to one of the preceding claims, **characterised in that** the dowel body (2) consists of plastic material.

## Revendications

1. Cheville à expansion comportant un corps de cheville (2) s'étendant dans la direction axiale, qui est équipée sur son contour extérieur d'éléments de blocage en rotation (4), le corps de cheville (2) présentant un perçage axial (10) ainsi que, dans sa zone avant dans le sens d'enfoncement, une partie de pied (11), dans laquelle on peut visser une vis de fixation, **caractérisée en ce que** le perçage (10) de la partie de pied, présente une paroi intérieure (15) cylindrique et lisse et **en ce que** dans la paroi extérieure (14) de la partie de pied (11) est réalisé au moins un renfoncement (13) du type poche, qui s'étend sur une partie de la longueur axiale (d) et sur une partie du périmètre de la partie de pied (11), et présente une épaisseur de paroi (x) réduite.

2. Cheville à expansion selon la revendication 1, **caractérisée en ce que** l'épaisseur de paroi (x) dans la zone du renfoncement (13) du type poche, est d'environ 1/6 à 2/3 de l'épaisseur de matière (t) des zones de bordure.

3. Cheville à expansion selon la revendication 1 ou 2, **caractérisée en ce que** le renfoncement (13) du type poche présente une étendue axiale (1) qui est d'environ 1/10 à environ 9/10 de la longueur axiale (d) de la partie de pied (11).

4. Cheville à expansion selon l'une des revendications précédentes, **caractérisée en ce que** l'étendue (w) du renfoncement (13) du type poche, dans la direction périphérique, est d'environ 1/6 à 3/4 du périmètre du corps de cheville (2) au droit de la partie de pied (11).

5. Cheville à expansion selon l'une des revendications précédentes, **caractérisée en ce que** dans la paroi extérieure (14) de la partie de pied (11) du corps de cheville (2) sont prévus deux renfoncements (13) ou plus qui sont disposés l'un derrière l'autre dans la direction axiale et/ou à des distances angulaires égales le long du périmètre de la partie de pied (11).

6. Cheville à expansion selon l'une des revendications précédentes, **caractérisée en ce que** les renfoncements (13) du type poche sont des figures géométriques, des flèches ou des caractères alphanumériques.

7. Cheville à expansion selon l'une des revendications précédentes, **caractérisée en ce que** le corps de cheville (2) présente un ou plusieurs points destinés à être pliés (8, 9), le long de son étendue axiale.

8. Cheville à expansion selon l'une des revendications précédentes, **caractérisée en ce que** le corps de cheville (2) est en matière plastique.
